# EUROPÄISCHE PATENTSCHRIFT

(11) **EP 3 063 611 B1**
(45) Veröffentlichungstag und Bekanntmachung des Hinweises auf die Patenterteilung: **16.09.2020**
(21) Anmeldenummer: 13786647.1
(22) Anmeldetag: 29.10.2013
(51) Int. Cl.: G06F 3/0482, G06F 3/0481, G06F 3/0488, B60K 37/06, B60K 35/00, G01C 21/36

(54) **VORRICHTUNG UND VERFAHREN ZUM ANPASSEN DES INHALTES EINER STATUSLEISTE**
DEVICE AND METHOD FOR ADAPTING THE CONTENT OF A STATUS BAR
DISPOSITIF ET PROCÉDÉ D'ADAPTATION DU CONTENU D'UNE BARRE D'ÉTAT

(43) Veröffentlichungstag der Anmeldung: 07.09.2016
(73) Patentinhaber: Volkswagen Aktiengesellschaft, 38440 Wolfsburg (DE)
(72) Erfinder: WILD, Holger, 10179 Berlin (DE); CZELNIK, Mark Peter, 38444 Wolfsburg (DE); ALTHOFF, Frank, 31275 Lehrte (DE)
(86) Internationale Anmeldenummer: PCT/EP2013/072608
(87) Internationale Veröffentlichungsnummer: WO 2015/062634

(56) Entgegenhaltungen:
- WO-A1-2011/107149
- WO-A2-2006/108617
- DE-A1- 10 140 874
- DE-A1- 10 360 657
- DE-A1-102007 023 290
- US-A1- 2010 185 980
- US-A1- 2012 185 456
- US-B1- 6 211 858
- N/a: "Software Operating Guide IntelliView III Version 26. Part No. 84303175", New Holland Agriculture, 1 January 2011 (2011-01-01), pages 1-1, XP055304190, Retrieved from the Internet: URL:N/A [retrieved on 2016-09-20]

## Beschreibung

### Stand der Technik

Die vorliegende Erfindung betrifft eine Vorrichtung sowie ein Verfahren zum Anpassen des Inhaltes einer Statusleiste auf einem Bildschirm. Insbesondere betrifft die vorliegende Erfindung Verbesserungen bei der anwenderspezifischen Zusammenstellung von Informationen in einer Statusleiste einer Mensch-Maschine-Schnittstelle (Human Machine Interface, HMI) eines Fortbewegungsmittels.

Bei der Wiedergabe von Informationen auf Bildschirmen, welche Teil einer HMI sind, werden Statusleisten verwendet, um die für einen Anwender wesentlichen Informationen kompakt darzustellen. Häufig werden dabei Sinnbilder ("Icons") für bestimmte Funktionen oder Betriebszustände verwendet. Aufgrund der vielen heterogenen Funktionen im Infotainment, dem begrenzten Platz und unterschiedlichen Kundenerwartungen gestaltet sich die Auswahl der dazustellenden Informationen sehr schwierig und stellt immer einen Kompromiss dar. So ist es üblich, in Abhängigkeit eines aktuellen Betriebszustandes eines mit der HMI verbundenen Systems Inhalte in der Statusleiste wiederzugeben oder aus dieser zu entfernen. Mitunter werden die Icons auch betriebszustandsabhängig modifiziert (z.B. bei der Feldstärkeanzeige eines Mobilfunknetzes oder der aktuellen Ladekapazität eines elektrochemischen Energiespeichers). US 7,996,045 B1 offenbart ein elektronisches Anwenderendgerät mit einer Statusleiste, bei welchem eine Interaktion auf ein bestimmtes Symbol in der Statusleiste eine Informationsübergabe an einen zweiten Bereich in einer zusätzlichen Ebene eines Bildschirms bedingt.

DE10140874 offenbart Komfortbedienecken zur Anzeige des Status einer Kommunikationsvorrichtung oder eines Ladezustandes. Ein Betätigen der Komfortbedienecke kann dann bewirken, dass eine detaillierte Statusanzeige angezeigt wird.

US6211858 offenbart ein Verfahren zum Anpassen des Inhaltes eines Statusleiste, auf einem Bildschirm, insbesondere einer Mensch-Maschine-Schnittstelle eines Fortbewegungsmittels, welche sich in einem, durch eine horizontale Linie getrennten Bereich von einem linken Rand zu einem rechten Rand des Bildschirms erstreckt und lediglich zur Anzeige unterschiedlicher Informationen, nicht jedoch für einen Aufruf den Informationen zugeordneter Funktionen eingerichtet ist, sogenannte Statusicons, wobei das Verfahren die Schritte umfasst: das Anpassen des Inhaltes einzelner Statusicons der Statusleiste zu einem Anzeigen von Informationen zu einer zweiten Vielzahl betriebszustandsabhängiger Informationen.

WO2006108617 offenbart ein Verfahren bei dem Informationen in einem Verkehrsmittel, insbesondere einem Kraftfahrzeug, dargestellt werden. Die Informationen sind in Form von hierarchischen Menüstrukturen organisiert. D.h., man gelangt von einem Hauptmenü durch Auswahl eines Menüpunkts zu einem hierarchisch tieferen Menü, welches wiederum Menüpunkte aufweist. Innerhalb der Menüs oder am Ende eines hierarchischen Menüzweigs werden die den Menüs zugeordneten Objekte dargestellt. Dies können beispielsweise Anzeigen für betriebs oder verkehrsbezogene Daten sein.

US 2010/0185980 A1 offenbart ein Verfahren zur Anzeige von Sinnbildern (englisch: "icon"), bei welchem eine flexible Anordnung unterschiedlicher Icons in unterschiedlichen Anzeigebereichen eines Bildschirms vorgenommen werden können.

DE 103 60 657 A1 offenbart ein Bediensystem für ein Kraftfahrzeug, welches mit einem manuellen Betätigungsmittel eine Einflussnahme auf die Darstellung einer Menüstruktur ermöglicht.

WO 2011/107149 A1 offenbart ein Verfahren zum Erzeugen einer Reisestatusnachricht, während ein Navigationsvorhaben ausgeführt wird.

DE 10 2007 023 290 A1 offenbart eine Anwenderschnittstelle für ein Fortbewegungsmittel, welches von einem Anzeigemodus in einen Bedienmodus und weiter in einen Auswahlbedienmodus gewechselt werden kann, in dem mit einer Auswahl eines Bedienparameters verknüpfte Auswahlinformationen in einem Statusinformationsbereich dargestellt werden.

Es existiert das grafische Benutzerführungssystem für Fahrzeuge Intelliview, "Software Operating Guide IntelliView III Version 26. Part No. 84303175",New Holland Agriculture, 1. Januar 2011, welches eine reiterbasierte Darstellung von Statusicons und interaktiven Ikons verwendet.

Es ist eine Aufgabe der vorliegenden Erfindung, die in einer Statusleiste wiedergegebenen Informationen besser an einen Anwenderwunsch anzupassen.

### Offenbarung der Erfindung

Die vorstehend genannte Aufgabe wird erfindungsgemäß durch ein Verfahren mit den Merkmalen gemäß Anspruch 1, eine Vorrichtung mit den Merkmalen gemäß Anspruch 11, ein Computer-lesbares Medium mit den Merkmalen gemäß Anspruch 16 und eine Signalfolge mit den Merkmalen gemäß Anspruch 17 gelöst. Das Verfahren dient zum Anpassen des Inhaltes einer Statusleiste auf einem Bildschirm, wobei der Bildschirm als berührungsempfindliche Anzeige (Touch Screen) ausgestaltet sein kann. Die Statusleiste ist entsprechend der einleitenden Diskussion des Standes der Technik zur kompakten Wiedergabe unterschiedlicher Informationsinhalte ausgestaltet. Sie kann insbesondere an einem oberen Rand des Bildschirms angeordnet sein. Ihre Inhalte sind weitgehend unabhängig von dem in einem zweiten, unter der Statusleiste angeordneten Bildschirminhalt. Während der zweite Bildschirminhalt im Wesentlichen zur Interaktion zwischen dem Anwender und der HMI bezüglich der Bedienung eines vordefinierten Funktionsumfangs dient, werden die Inhalte der Statusleiste im Wesentlichen durch tatsächlich durch das System ausgeführte Funktionen bzw. in Abhängigkeit des aktuellen Betriebszustandes eines mit der HMI bedienten Systems dargestellt. Der Bildschirm kann beispielsweise Bestandteil einer zentral im Armaturenbrett positionierten Mensch-Maschine-Schnittstelle eines Fortbewegungsmittels, insbesondere eines Straßenfahrzeugs (z.B. ein Pkw), sein. Alternativ oder zusätzlich kann der Bildschirm auch innerhalb eines Kombiinstruments angeordnet sein, welches im Allgemeinen hinter einem Lenkrad eines Pkw angeordnet ist. Eine weitere mögliche Anwendung der vorliegenden Erfindung ist ein tragbares elektronisches Gerät, wie z.B. ein Smartphone. Erfindungsgemäß wird zunächst ein Eingabefokus auf die Statusleiste gesteuert. Mit anderen Worten wird der HMI mitgeteilt, dass der Anwender eine Interaktion zur Modifikation der Statusleiste beabsichtigt. Der Eingabefokus kann beispielsweise durch Betätigen eines vordefinierten berührungsempfindlichen Bereiches eines Touch Screens, durch Betätigen eines mechanischen Bedienelementes, durch Blickverfolgung, durch Spracheingabe o.Ä. erfolgen. Nachdem die Statusleiste den Eingabefokus erhalten hat, wird eine Anwendereingabe zur Anpassung des Inhaltes der Statusleiste empfangen. Für die Anwendereingabe ergeben sich dieselben Möglichkeiten wie zum Steuern des Eingabefokus'. Selbstverständlich können die Steuerung des Eingabefokus und die Anwendereingabe auch durch ein und denselben Bedienvorgang (z.B. Tippen auf die Statusleiste) erfolgen. Insbesondere bieten sich Gestenerkennung und Fingerbewegungen unter Kontakt mit dem Bildschirm zum Anpassen des Inhaltes der Statusleiste an. Das Anpassen bedingt das Anzeigen einer zusätzlichen Information gegenüber einem zuvor dargestellten Informationsumfang. Mit anderen Worten wird ein zusätzliches Icon, ein zusätzlicher Schriftzug, oder eine neue Anordnung von Informationen innerhalb der Statusleiste bewirkt, um die Informationen innerhalb der Statusleiste dem Bedarf eines Anwenders anzupassen. Bevorzugt umfasst das Anpassen des Inhaltes der Statusleiste keine darüber hinausgehende Aktivierung von Funktionen der HMI bzw. des hinter dem HMI liegenden Systems. Mit anderen Worten werden zwar Parameter der Darstellung von Informationen innerhalb der Statusleiste verändert, jedoch keine üblicherweise in der Statusleiste versinnbildlichten Funktionen oder Zustände durch die Anwendereingabe verändert. Dabei umfasst das Anpassen des Inhaltes der Statusleiste ein Anzeigen von Informationen zu einer zweiten Vielzahl betriebszustandsabhängiger Informationen, wobei die zweite Vielzahl gegenüber der ersten Vielzahl mehr Informationen in Form eines weiteren Icons umfasst. Alternativ oder zusätzlich kann die zweite Vielzahl auch weniger Informationen in Form eines Icons weniger umfassen. Wenn ferner ein Anwender eine höhere Informationsdichte oder eine bessere Übersichtlichkeit innerhalb der Statusleiste wünscht, kann diesem Wunsch erfindungsgemäß entsprochen werden. Selbstverständlich können auch die Informationsinhalte teilweise oder sämtlich ausgetauscht werden, beispielsweise um ein Ensemble (Vielzahl von Informationen), welches durch eine aktuelle Anwendereingabe aufgerufen wurde, durch ein übergeordnetes Icon oder eine Ankündigung in Textform (z.B. "Media", "Navigation" oder "Klima"). Dies ermöglicht eine anwendergerechte Zusammenstellung von in der Statusleiste angezeigten Informationen. Das erfindungsgemäße Verfahren ermöglicht somit eine Anpassung des Informationsgehaltes der Statusleiste in Abhängigkeit eines Bedarfes eines Anwenders.

Die Unteransprüche zeigen bevorzugte Weiterbildungen der Erfindung.

Bevorzugt umfasst das Verfahren weiter ein Anzeigen von Informationen zu einer ersten Vielzahl betriebszustandsabhängiger Informationen vor dem Empfangen der Anwendereingabe. Diese können beispielsweise in Form von Sinnbildern (sogenannte "Icons") angezeigt werden, um Platz zu sparen und das Ablesen unabhängig von den Sprachkenntnissen eines Anwenders zu ermöglichen. Dabei umfasst die erste Vielzahl betriebszustandsabhängiger Informationen nicht die im Ansprechen auf das Anpassen des Inhaltes hinzugefügten Informationen. In diesem Zusammenhang sei angemerkt, dass das Anzeigen zusätzlicher Informationen nicht ausschließt, dass auf der ersten Vielzahl von Informationen Teile oder auch die gesamte Vielzahl von Informationen entfernt werden, bevor die zusätzliche Information angezeigt wird. Dies bietet die Möglichkeit, den Umfang der ersten Vielzahl betriebszustandsabhängiger Informationen im Ansprechen auf einen Anwenderwunsch um (wichtigere) Informationen zu erweitern.

Die Anwendereingabe kann beispielsweise ein Verweilen eines Fingers innerhalb eines vordefinierten Abstandsbereiches zum Bildschirm in einem Bereich vor der Statusleiste umfassen. Ein solcher Bedienschritt wird auch als "Hovern" bezeichnet. Eine solche Geste kann beispielsweise über Kamerasysteme und/oder über kapazitive Sensoren erfasst und ausgewertet werden. Alternativ oder zusätzlich kann die Anwendereingabe eine Geste umfassen, welche unter Berührung des Bildschirms stattfindet. Beispiele für solche Gesten sind "einfaches Tippen", "zweifaches Tippen", "Longpress" ("Gedrückthalten"), "Wischen" oder (unter Vermittlung zweier Finger) "Spreizen" bzw. "Zusammenführen". Solche Gesten haben sich als für Anwender intuitiv verwendbar im Bereich der Bedienung von Smart Phones und Tablet-PCs bewährt.

Weiter bevorzugt umfasst das Verfahren ein Vordefinieren einer ersten Vielzahl und/oder einer zweiten Vielzahl von Informationen in einem Konfigurationsmenü für die Statusleiste. Beispielsweise kann in einem Bereich "Einstellungen" in dem zweiten Bildschirmbereich (unterhalb der Statusleiste) eine Vielzahl von Konstellationen für unterschiedliche Erscheinungsformen der Statusleiste bzw. Ensembles durch einen Anwender gestaltet werden. Hierbei können beispielsweise Funktionsgruppen durch den Anwender gestaltet und optional benannt werden. In Abhängigkeit zusammengestellter Informationen kann auch eine automatische Benennung in Abhängigkeit einer den ausgewählten Informationen übergeordneten Funktionsfamilie erfolgen. Anschließend kann die Reihenfolge der konfigurierten Informationsensembles durch den Anwender oder automatisch festgelegt werden. Über die Reihenfolge kann bestimmt werden, welches Ensemble im Ansprechen auf eine Anwendereingabe auf ein aktuell dargestelltes Ensemble folgt. Dies ermöglicht eine intuitive und für den Anwender vertraute Gestaltung der Ensembles und Bedienung bei einem Wechsel von einem ersten Ensemble zu einem zweiten Ensemble.

Der Schritt des Anpassens des Inhaltes der Statusleiste kann eine Ankündigung einer eine zweite Vielzahl von Informationen anzeigenden Statusleiste umfassen.

Mit anderen Worten kann im Ansprechen auf eine Anwendereingabe zur Anpassung der Statusleiste ein der folgenden Vielzahl von Informationen übergeordnetes Icon oder ein übergeordneter Gattungsbegriff (z.B. kurzzeitig) angezeigt werden, um die Orientierung in der nun folgenden Darstellung der zweiten Vielzahl von Informationen zu erleichtern. Dies ermöglicht überdies eine rasche zweite Anwendereingabe, sofern die angekündigte Vielzahl von Informationen nicht dem Anwenderwunsch gerecht wird. In einer Ausgestaltung kann die Ankündigung nach einem Verstreichen einer vordefinierten Zeitdauer ohne Anwendereingabe durch die Anzeige der zweiten Vielzahl von Informationen ersetzt werden. Mit anderen Worten akzeptiert der Anwender die gewählte Darstellung der zweiten Vielzahl von Informationen, indem er die Ankündigung nicht ablehnend quittiert. Auf diese Weise kann eine Anpassung des Inhaltes der Statusleiste rascher dem Anwenderwunsch entsprechen.

Bei der vorstehend beschriebenen Ankündigung der zweiten Vielzahl von Informationen kann dem Anwender auch eine Übersicht einer Vielzahl von Themengebieten (z.B. in Form einer Liste) angezeigt werden, aus welcher eines mittels einer weiteren Anwendereingabe ausgewählt wird. Beispielsweise kann durch eine erste Anwendereingabe die Übersicht eingeblendet werden und durch eine zweite Anwendereingabe (Einzeltipp auf den entsprechenden Listeneintrag) die gewünschte Darstellung der Statusleiste ausgewählt werden. Im Ansprechen auf diesen Bedienschritt werden Informationen zum ausgewählten Themengebiet in einer größeren Detailtiefe in der Statusleiste angezeigt. Beispielsweise kann ein Themengebiet als "Klima" bezeichnet oder durch ein Thermometer-Icon versinnbildlicht werden. Bestätigt der Anwender die Anzeige dieses Themengebietes, füllt sich die Statusleiste mit unterschiedlichen Informationen zu aktuellen Einstellungen der Heiz- und Klimaanlagen des Fahrzeugs. Dies ermöglicht eine übersichtliche und intuitive Wahl der Konfiguration der Statusleiste.

Zum Erhalten von Informationen zu einem vorbestimmten Themengebiet in einer größeren Detailtiefe kann der Eingabefokus auf einen dem vorbestimmten Themengebiet zugeordneten Icon in der Statusleiste gesteuert werden. Dabei wird nicht die Statusleiste als Ganzes mit dem Eingabefokus belegt, sondern eine Vorauswahl in einem (beispielsweise in einem Hauptmenü angezeigten) Ensemble unterschiedlicher Themengebiete getroffen. Dies kann beispielsweise durch Tippen auf das zugeordnete Icon in der Statusleiste oder das Bewegen einer Markierung durch einen Dreh-/Drücksteller erfolgen. Wird der Eingabefocus durch eine Anwendereingabe bestätigt, erfolgt z.B. eine Anpassung des Inhaltes der Statusleiste durch Anzeige einer dritten Vielzahl von Icons, welche über das mittels des ausgewählten Icons vorbestimmte Themengebiet in einer größeren Detailtiefe informieren. Dies bietet die Möglichkeit einer schnellen und direkten Anzeige zusätzlicher Informationen.

Die erste Vielzahl von Informationen und die zweite Vielzahl von Informationen können jeweils eine unterschiedliche Kombination von Icons oder Text-Strings aus der folgenden Gruppe umfassen: Der aktuelle Mobilfunknetzbetreiber kann beispielsweise durch Angabe seines Namens oder einer Kurzbezeichnung identifiziert werden. Zusätzlich kann die aktuell ermittelte Mobilfunknetzfeldstärke (z.B. durch Anzeige eines Balkendiagramms) angezeigt werden. Eine aktuelle Lüfterstufe für die Heiz-/Klimaeinrichtung kann (z.B. durch ein Ventilatorsymbol und eine arabische Ziffer) angezeigt werden. Zusätzlich kann, sofern sich die Heiz-/Klimaeinrichtung in einem Umluftmodus befindet, ein gebogener Pfeil als Sinnbild einer Luftzirkulation angezeigt werden. Die aktuelle Uhrzeit (Tageszeit) kann insbesondere mit hoher Priorität an einer zentralen Position in der Statusleiste angezeigt werden. Selbiges gilt für das aktuelle Datum. Sofern eine Navigation aktiv ist, können ein Zielort (z.B. ein Städtename) und/oder eine Zieladresse sowie eine Entfernung zum Zielort (z.B. in Kilometern) und eine voraussichtliche Ankunftsszeit angezeigt werden. Betriebszustandsabhängig können weiter Informationseinheiten zum Status einer Lenkradheizung, einer Scheibenheizung oder einer Sitzheizung angezeigt werden. In Abhängigkeit einer Einstellung eines Radios kann angezeigt werden, ob Verkehrsfunknachrichten (TP) automatisch ausgegeben werden. Ein Symbol (z.B. ein Briefumschlag) kann das Vorhandensein ungelesener Nachrichten (E-Mails, Kurznachrichten, Sprachnachrichten o.Ä.) anzeigen. Sofern ein Mobiltelefon mit dem System verbunden ist, kann der Ladezustand eines Energiespeichers des Telefons angezeigt werden. Diese Anzeige kann beispielsweise durch eine Information erweitert werden, inwiefern der Energiespeicher aktuell geladen wird. Zusätzlich kann eine Drahtloskurzstreckendatenverbindung (z.B. WiFi, Bluetooth o.Ä.) angezeigt werden. Hinsichtlich einer Audiowiedergabe kann beispielsweise durch ein (durchgestrichenes) Lautsprechersymbol dargestellt werden, ob das Audiosystem derzeit stumm geschaltet oder aktiv ist, mit welcher Lautstärkestufe es einen aktuellen Titel eines korrespondierenden Interpreten wiedergibt und aus welcher Quelle die Audiowiedergabe erfolgt. Zusätzlich können Informationen zum Straßenzustand (z.B. durch Darstellung eines Eiskristall-/Schneeflockensymbols) angezeigt werden und zu vorsichtiger Fahrweise mahnen. Zudem können vorliegende Verkehrswarnungen, welche über eine Datenverbindung und/oder einen Rundfunksender erhalten wurden, beispielsweise durch ein Ausrufezeichen oder ein Gefahrensymbol angezeigt werden. Zusätzlich können derzeit verwendete Fahrerassistenzsysteme durch jeweilige Symbole angezeigt werden. Schließlich können auch Soll-/Ist-Innenraumtemperaturen (beispielsweise Fahrzeugseitenspezifisch) in der Statusleiste wiedergegeben werden.

Bevorzugt umfassen die erste Vielzahl von Informationen und die zweite Vielzahl von Informationen jeweils mehrere Einträge der vorgenannten Gruppe. Dabei weist die zweite Vielzahl von Informationen bevorzugt mindestens einen, äußerst bevorzugt zwei oder drei Einträge auf, welche nicht in der ersten Vielzahl von Informationen enthalten sind.

Um mit der vorliegenden Erfindung noch nicht vertrauten Anwendern die Möglichkeit zur Anpassung der Statusleiste anzuzeigen, kann ein Indikator in der Statusleiste dargestellt werden, welcher den Anwender zur Interaktion mit der Statusleiste anregt. In Menüleisten bei rechnergestützten Programmen haben sich hierzu insbesondere mehrere, übereinander angeordnete Punkte oder durch Punkte zusammengesetzte Dreiecke (insbesondere an den Ecken einer Schaltfläche) durchgesetzt. Die Verwendung solcher Indikatoren verbessert die intuitive Bedienbarkeit erfindungsgemäßer Systeme für potentielle Anwender.

Eine Möglichkeit zur Darstellung der unterschiedlichen Ensembles bzw. Vielzahlen von Informationen auf der erfindungsgemäßen Statusleiste entspricht einer virtuellen Walze, welche den Querschnitt eines gleichmäßigen Polygons aufweisen kann. Solche Formen sind häufig bei Bleistiften und anderen Schreibutensilien bekannt, um diese gegen ein unerwünschtes Rollen zu sichern. Eine jeweils ebene Seite der Walze kann eine erste Vielzahl von Informationen darstellen, während eine weitere ebene Seite der Walze eine zweite Vielzahl von Informationen darstellt usw. Ein Auswählen einer gewünschten Vielzahl von Informationen kann daher intuitiv dergestalt erfolgen, dass der Anwender die Walze mit seinem Finger antippt, und unter Kontakt mit dem Bildschirm eine Wischbewegung nach oben oder unten durchführt. Eine Auswahl einer gewünschten Vielzahl von Informationen erfolgt dann durch Entfernen des Fingers von der Oberfläche des Bildschirms, so dass die Walze in einer bis zu diesem Zeitpunkt eingenommenen Position verbleibt. Jede der durch das Polygon definierten Mantelflächen der Walze kann somit eine (z.B. durch einen Anwender definierte) Vielzahl von Informationen aufweisen, welche der Anwender zeitgleich dargestellt wissen möchte. Eine walzenförmige Darstellung der Statusleiste(n) stellt eine besonders schnelle und intuitive Möglichkeit zum Umschalten zwischen vordefinierten Informationsensembles dar.

Gemäß einem weiteren Aspekt der vorliegenden Erfindung wird eine Vorrichtung für ein Fahrzeug, umfassend einen Bildschirm, eine Eingabeeinrichtung und eine Verarbeitungseinrichtung vorgeschlagen. Die Vorrichtung ist eingerichtet, ein Verfahren nach einem der vorstehenden Ansprüche auszuführen. Die Merkmale, Merkmalskombination und die sich aus diesen ergebenden Vorteile entsprechen den in Verbindung mit dem erstgenannten Erfindungsaspekt beschriebenen derart ersichtlich, dass zur Vermeidung von Wiederholungen auf die obigen Ausführungen verwiesen wird.

Bevorzugt ist der Bildschirm der erfindungsgemäßen Vorrichtung berührungsempfindlich (als sogenannter "Touch Screen") ausgestaltet. Berührungssensitive Oberflächen stellen eine weit verbreitete und bewährte Möglichkeit zur intuitiven Bedienung von HMIs dar. Alternativ oder zusätzlich kann der Bildschirm auch innerhalb eines Kombiinstrumentes angeordnet sein, in welches immer häufiger matrixförmig aufgebaute Bildschirme zur Anzeige programmierbarer Bildschirminhalte integriert werden. Selbstverständlich kann sowohl die HMI als auch die Anzeige innerhalb des Kombiinstrumentes eines Fahrzeugs erfindungsgemäß ausgestaltet sein. Dabei können die Statusleisten beider Anzeigeeinheiten entweder unabhängig voneinander konfiguriert oder logisch (z.B. ebenfalls durch einen Anwender konfiguriert) miteinander gekoppelt sein.

Die Eingabeeinheit kann beispielsweise ein Kamerasystem und/oder kapazitive Sensorik umfassen. Auf diese Weise ist die Eingabeeinheit eingerichtet, ein Verweilen eines Fingers eines Anwenders in einem vordefinierten Abstandsbereich zu erkennen und der Statusleiste, insbesondere einem auf ihr angeordneten Icon, zuzuordnen. Auf diese Weise kann bei der Annäherung eines Fingers des Anwenders der Fokus auf die Statusleiste gelegt und anschließend beim Kontakt des Fingers mit der Eingabeeinheit bzw. dem Bildschirm das Anpassen des Inhalts der Statusleiste ausgelöst werden. Selbstverständlich muss das Steuern des Eingabefokus' auch die Statusleiste und das Empfangen der Anwendereingabe nicht durch separate Bedienschritte erfolgen sondern kann beispielweise durch ein und denselben Tipp-Vorgang auf dem Bildschirm erfolgen. Alternativ kann das Fokussieren der Statusleiste durch eine Bewegung und die Bestätigung ("Anwendereingabe"), beispielsweise durch ein Sprachkommando, erfolgen. Für den Fachmann bietet sich eine Vielzahl möglicher und geeigneter Bedienschritte, ohne dass diese im Detail und umfassend beschrieben werden müssen.

Bevorzugt kann die Verarbeitungseinrichtung zur Ausführung des erfindungsgemäßen Verfahrens als Prozessor innerhalb einer Mensch-Maschine-Schnittstelle (HMI) ausgestaltet sein. Auf diese Weise kann die vorliegende Erfindung allein durch Softwarecode verwirklicht werden, während auf vorhandene Hardware, die nach wie vor für weitere Funktionen zur Verfügung steht, zurückgegriffen wird. Dies ermöglicht eine einfache und kostengünstige Implementierung der vorliegenden Erfindung.

Gemäß einem weiteren Aspekt der vorliegenden Erfindung wird ein computerlesbares Medium unter Schutz gestellt, welches Anweisungen aufweist, die, wenn sie auf einem programmierbaren Prozessor ausgeführt werden, den Prozessor veranlassen, ein erfindungsgemäßes Verfahren durchzuführen, wie es in Verbindung mit dem erstgenannten Erfindungsaspekt im Detail beschrieben worden ist. Das computerlesbare Medium kann beispielsweise eine CD, ein Speicherstick, eine Festplatte, eine DVD o.Ä. sein.

Gemäß einem weiteren Aspekt der vorliegenden Erfindung wird eine Signalfolge vorgeschlagen, welche Anweisung repräsentiert, wie sie auf dem unter Schutz gestellten computerlesbaren Medium enthalten sind. Auf diese Weise wird die vorliegende Erfindung auch durch informationstechnisch verbreitete Signale verwirklicht, welche beispielsweise über Datenleitungen (z.B. das Internet, ein Intranet o.Ä.) propagiert werden können. Ein Ausführen des erfindungsgemäßen Verfahrens ist daher ebenso wenig zur Verwendung der vorliegenden Erfindung erforderlich, wie ein physischer Datenträger als computerlesbares Medium.

### Kurze Beschreibung der Zeichnungen

Nachfolgend werden Ausführungsbeispiele der Erfindung unter Bezugnahme auf die begleitenden Zeichnungen im Detail beschrieben. In den Zeichnungen ist:
- Figur 1: eine schematische Ansicht eines Bildschirminhaltes einer HMI eines Automobils, umfassend eine Statusleiste;
- Figur 2: eine schematische Ansicht eines Bildschirminhaltes eines bekannten Betriebssystems für mobile Endgeräte, umfassend eine Statusleiste;
- Figur 3: eine schematische Ansicht eines Bildschirminhaltes eines alternativen bekannten Betriebssystems für mobile Endgeräte, umfassend eine Statusleiste;
- Figur 4: eine Abfolge unterschiedlicher Erscheinungsformen einer Statusleiste im Ansprechen auf eine Ausführung eines Ausführungsbeispiels eines erfindungsgemäßen Verfahrens;
- Figur 5: eine alternative Abfolge unterschiedlicher Erscheinungsformen einer Statusleiste im Ansprechen auf eine Ausführung eines alternativen Ausführungsbeispiels des erfindungsgemäßen Verfahrens;
- Figur 6: eine Zusammenstellung möglicher Erscheinungsformen einer Statusleiste im Ansprechen auf das Durchführen eines Ausführungsbeispiels eines erfindungsgemäßen Verfahrens;
- Figur 7: eine Abfolge unterschiedlicher Erscheinungsformen einer Statusleiste im Ansprechen auf ein Ausführungsbeispiel eines erfindungsgemäßen Verfahrens;
- Figur 8: eine schematische Ansicht eines Fahrzeugs, welches mit einem Ausführungsbeispiel einer erfindungsgemäßen Vorrichtung ausgestattet ist; und
- Figur 9: ein Flussdiagramm, veranschaulichend Schritte eines Ausführungsbeispiels eines erfindungsgemäßen Verfahrens.

### Ausführungsformen der Erfindung

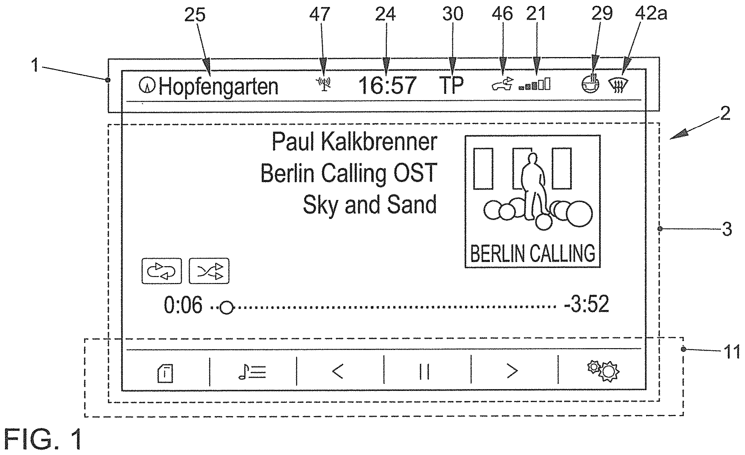

Figur 1 zeigt eine mögliche Ansicht eines Bildschirminhaltes einer HMI eines Kraftfahrzeugs. In einem oberen, durch eine horizontale Linie getrennten Bereich ist eine Statusleiste 1 zu sehen. Von links nach rechts sind ein Zielort 25, das Vorhandensein einer hinreichenden Signalstärke für den digitalen Radioempfang 47, die aktuelle Tageszeit 24, ein Symbol für den Verkehrsfunk 30, ein Symbol für eine Telefonverbindung 46, die aktuelle Mobilfunknetzstärke 21, ein Betriebszustand der Lenkradheizung 29 sowie ein Betriebszustand der Frontscheibenheizung 42a dargestellt. Unter der Statusleiste 1 ist ein Hauptinteraktionsbereich 3 des Bildschirms 2 dargestellt. Hier wird ein aktuell wiedergegebenes Album sowie dessen Name, dessen Interpret und ein aktuell wiedergegebener Titel dargestellt. Zudem finden sich am unteren Rand des Hauptinteraktionsbereiches 3 unterschiedliche Schaltflächen 11 zur Steuerung der Audiowiedergabe.

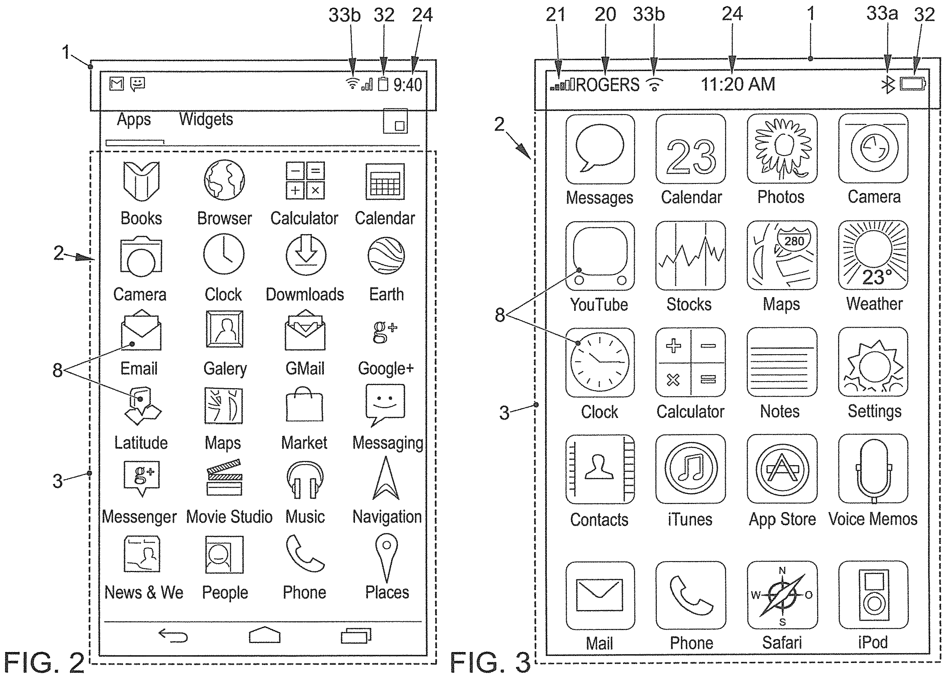

Figur 2 zeigt eine mögliche Ansicht eines Bildschirminhaltes, wie er aus dem Betriebssystem Android (eingetragene Marke) bekannt ist. Am oberen Rand des Bildschirms 2 ist eine Statusleiste 1 dargestellt, in welcher ein Symbol für eine WiFi-Verbindung 33b, ein Symbol für den Ladezustand eines Energiespeichers 32 sowie eine aktuelle Tageszeit 24 dargestellt sind. In einem darunter liegenden Hauptinteraktionsbereich 3 sind Icons 8 für unterschiedliche Funktionen ("Applikationen", "Apps") dargestellt. Während der Hauptinteraktionsbereich 3 dafür eingerichtet ist, Anwendereingaben entgegenzunehmen, ist die Statusleiste 1 lediglich zur Anzeige unterschiedlicher Informationen eingerichtet.

Figur 3 zeigt eine schematische Bildschirmansicht, wie sie aus dem IOS (eingetragene Marke) bekannt ist. Am oberen Bildschirmrand befindet sich eine Statusleiste 1, in welcher von links nach rechts der ein Balkendiagramm einer aktuellen Feldstärke des Mobilfunknetzes 21, der Name eines verwendeten Mobilfunknetzbetreibers 20, das Vorhandensein einer WiFi-Verbindung 33b, die aktuelle Tageszeit 24, das Vorhandensein und der Verbindungsstatus einer Bluetooth-Verbindung 33a sowie ein aktueller Ladezustand eines Energiespeichers 32 dargestellt werden. In einem darunter liegenden Hauptinteraktionsbereich 3 sind Icons 8, repräsentierend unterschiedliche Funktionsumfänge ("Applikationen", "Apps"), angeordnet. Der Hauptinteraktionsbereich 3 ist eingerichtet, Anwendereingaben entgegenzunehmen und Informationen an den Anwender auszugeben. Eine Interaktion mit dem Anwender ist für die Statusleiste 1 hingegen nicht vorgesehen.

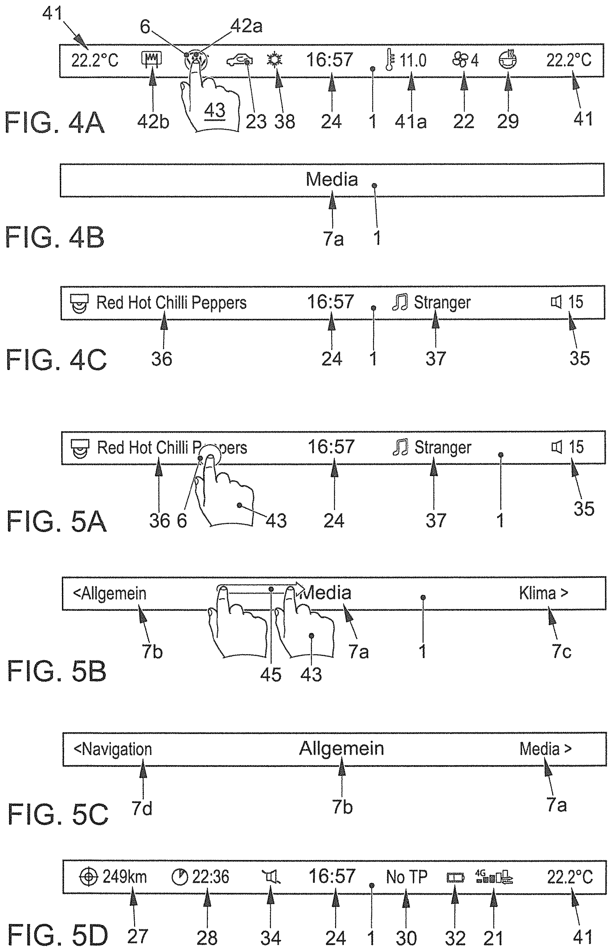

Figur 4 zeigt drei Ansichten a), b), c) einer erfindungsgemäß ausgeführten Statusleiste 1, wie sie in Abhängigkeit einer Anwenderinteraktion erscheinen können. Die in Teildiagramm a) dargestellte Statusleiste 1 zeigt von links nach rechts eine aktuell eingestellte Temperatur für die linke Fahrzeugseite 41, einen Betriebszustand einer Heckscheibenheizung 42b, einen Betriebszustand einer Frontscheibenheizung 42a, ein Symbol für einen Umluftmodus 23, ein Symbol zur Warnung vor Straßenglätte 38, die Tageszeit 24, eine Außentemperatur 41a, eine Lüfterstufe 22, den Betriebszustand einer Lenkradheizung 29 sowie eine aktuelle Temperatur 41 für die rechte Fahrzeughälfte. Der Finger eines Anwenders 43 berührt die Statusleiste 1, wodurch das System den Eingabefokus 6 sowie eine Anwendereingabe zur Anpassung des Inhaltes der Statusleiste 1 empfängt. Im Ansprechen darauf wird, wie im Teildiagramm d) dargestellt, das Themengebiet "Media" 7a angekündigt. Da keine weitere Anwenderinteraktion erfolgt, wird kurze Zeit später das im Teildiagramm c) dargestellte Erscheinungsbild für die Statusleiste 1 eingestellt. Von links nach rechts wird ein aktueller Interpret 36, eine aktuelle Tageszeit 24, ein aktuell wiedergegebener Titel 37 und eine aktuell gewählte Lautstärkestufe 35 gewählt. Die in Teildiagramm c) dargestellten Informationen stellen Detailinformationen zum in Teildiagramm b) dargestellten Themengebiet 7a dar.

Figur 5 zeigt ein alternatives Bedienszenario, welches sich an das in Figur 4 dargestellte Szenario anschließen könnte. Das Teildiagramm a) entspricht der Darstellung des Teildiagramms c) aus Figur 4. Der Finger eines Anwenders 43 berührt die Statusleiste 1 und übergibt ihr somit den Eingabefokus 6. Im Ansprechen darauf wird die im Teildiagramm b) dargestellte Erscheinungsform der Statusleiste 1 aktiviert. Unterschiedliche Themengebiete 7a, 7b, 7c werden als Text-Strings in der Statusleiste 1 zur Auswahl gestellt. Durch einen Wischvorgang 45 mit dem Finger verschiebt der Anwender 43 den zum Themengebiet 7b gehörenden Text-String in die Mitte der Statusleiste 1. Der zum Themengebiet 7c gehörende Text-String hat das in Teildiagramm c) dargestellte Ensemble verlassen, während ein dem Themengebiet 7d zugehöriger Text-String nachgerückt ist. Indem keine weitere Anwendereingabe erfolgt, wird nach einer vordefinierten Zeitdauer die im Teildiagramm d) dargestellte Erscheinungsform aktiviert. In dieser zeigen von links nach rechts eine Kilometerangabe die verbleibende Wegstrecke 25 bis zu einem Zielort, eine Zeitangabe die voraussichtliche Ankunftszeit 28, ein durchgestrichenes Lautsprechersymbol das stummgeschaltete Audiosystem 34, eine Zeitangabe die aktuelle Tageszeit 24, ein Text-String des Betriebszustand einer Verkehrsfunkfunktion 30, ein Icon den Ladezustand eines Energiespeichers 32, ein Balkendiagramm die aktuelle Mobilfunknetzstärke 21 und eine Gradzahl die Innenraumtemperatur 41. Die in Teildiagramm d) dargestellten Informationen bilden ein Ensemble der wichtigsten Informationen, welche zur Anzeige unter dem Themengebiet 7b vordefiniert wurden.

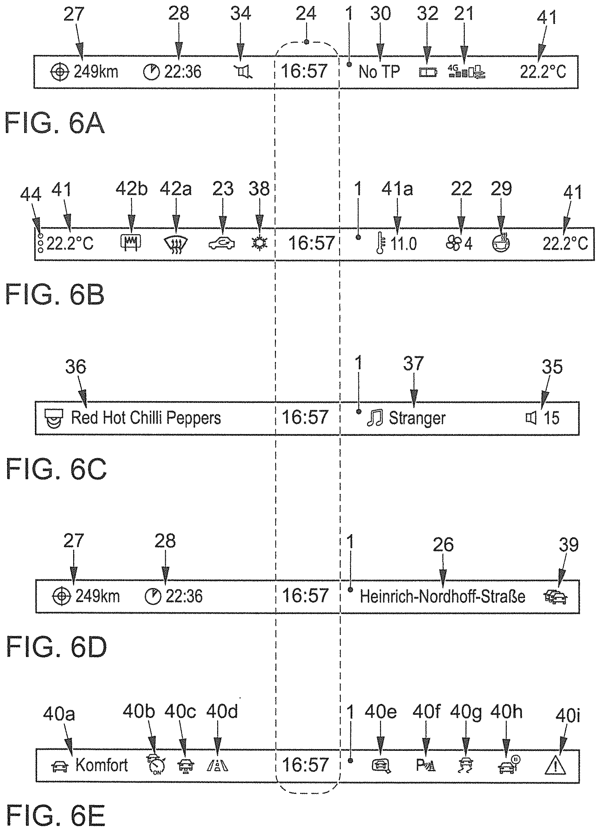

Figur 6 zeigt eine Übersicht möglicher Erscheinungsformen einer Statusleiste 1. Die in Teildiagramm a) dargestellte Ansicht entspricht der im Teildiagramm d) aus Figur 5 bekannten Ansicht. In Teildiagramm b) wurde die in Teildiagramm a) in Figur 4 dargestellte Ansicht um einen Indikator 44 erweitert, mit Hilfe dessen einem Anwender visualisiert wird, dass er durch Interaktion mit der Statusleiste 1 Einfluss auf deren Erscheinung nehmen kann. Der Indikator 44 ist als linear übereinander angeordnete 3-Punkte Kette dargestellt. Teildiagramm c) entspricht der in Teildiagramm a) in Figur 5 dargestellten Erscheinung. In Teildiagramm d) zeigen von links nach rechts eine Kilometerangabe die Entfernung 27 zum Zielort, eine Uhrzeitangabe die voraussichtliche Ankunftszeit 28, eine Zeitangabe die aktuelle Tageszeit 24, ein Text-String den Straßennamen einer Zieladresse 26 und ein Stausymbol 39 eine aktuelle Verkehrswarnung. Teildiagramm e) zeigt ein Ensemble für aktuell verwendete Fahrerassistenzsysteme (FAS). Von links nach rechts sind eine Fahrwerks- und Getriebeeinstellung 40a, ein Betriebsmodus eines Tempomaten 40b, ein Betriebsmodus eines Abstandhaltesystems 40c, ein Betriebsmodus eines Spurhalteassistenten 40d, die aktuelle Tageszeit 24, ein Betriebsmodus eines Tote-Winkel-Assistenten 40e, ein Betriebszustand eines Einparkhilfesystems 40f, ein Betriebszustand eines Fahrdynamikregelungssystems 40g, ein Betriebszustand eines Systems zur Interpretation von Verkehrsschildern 40h und ein Gefahrensymbol 40i dargestellt.

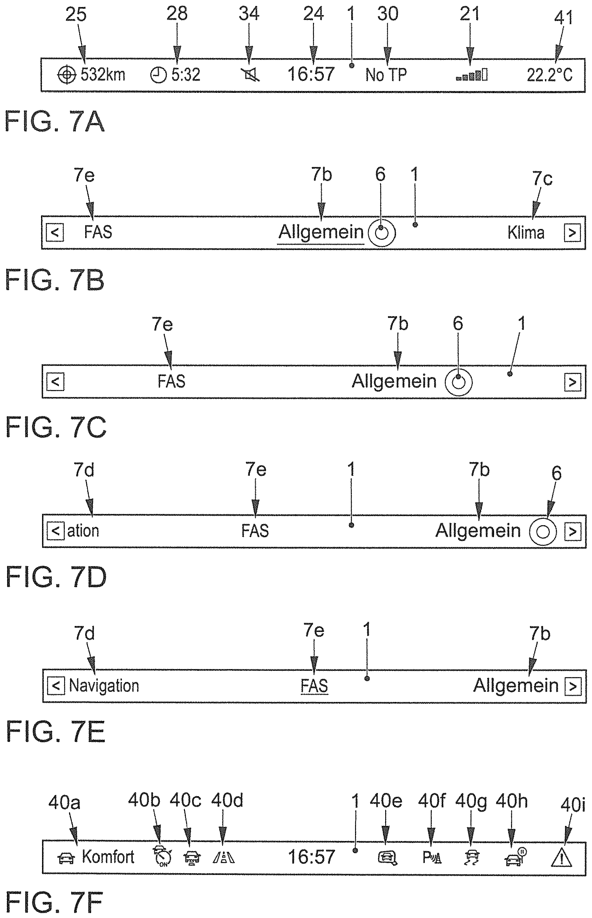

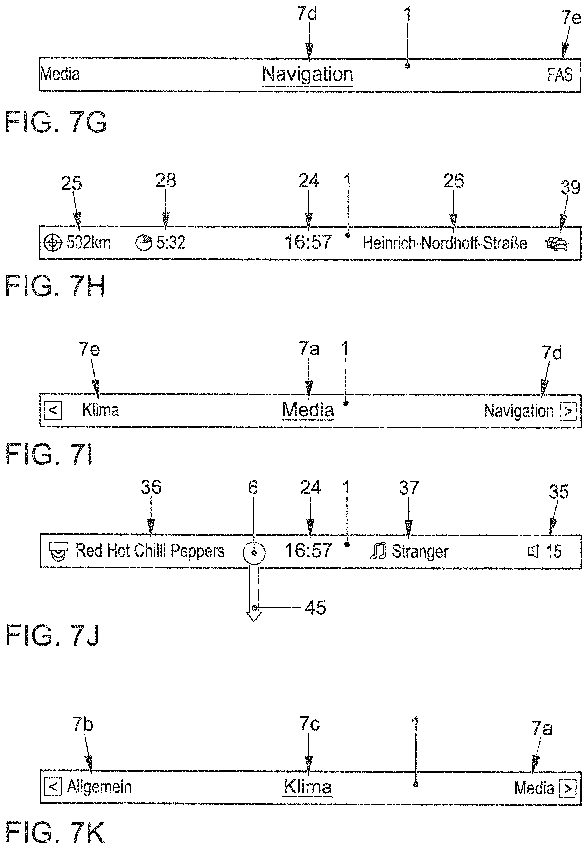

Figur 7 zeigt Ansichten einer Statusleiste 1, wie sie durch ein Ausführungsbeispiel eines erfindungsgemäßen Verfahrens nacheinander aktiviert werden könnten.

Teildiagramm a) zeigt eine im Wesentlichen mit der Darstellung aus Teildiagramm d) in Figur 5 korrespondierende Anordnung. Der Erhalt eines Eingabefokus' führt im Teildiagramm b) dazu, dass Themengebiete 7e), 7b) und 7c) in der Statusleiste 1 angezeigt werden. Durch einen Wischvorgang verschiebt der Anwender die Statusleiste 1 zwischen den Teildiagrammen b) bis e) derart nach rechts, dass das Themengebiet 7e in die Mitte der Statusleiste 1 rutscht, das Themengebiet 7b an den rechten Rand der Statusleiste 1 wandert und ein weiteres Themengebiet 7d am linken Rand der Statusleiste erscheint. Da keine weitere Anwenderinteraktion erfolgt, wird in Teildiagramm e) das zentrierte Themengebiet 7e (Fahrerassistenzsysteme, FAS) unterstrichen dargestellt und nach einer vordefinierten Zeitdauer die in Teildiagramm f) dargestellte Erscheinungsform der Statusleiste 1 aktiviert. Diese korrespondiert mit der in Teildiagramm e) in Figur 6 dargestellten Erscheinungsform. Durch eine (nicht dargestellte) Spracheingabe "Wechseln zur nächsten Ansicht der Statusleiste" ruft der Anwender das Themengebiet 7d ("Navigation") auf. Nach Verstreichen einer vordefinierten Zeitdauer wird die in Teildiagramm h) mit Teildiagramm d) in Figur 6 korrespondierende Ansicht der Statusleiste 1 aktiviert. Durch einen (nicht dargestellten) Tippvorgang auf die Statusleiste 1 kündigt die zentrale Darstellung des Themengebietes 7a ("Media") die nachfolgende Darstellung von Detailinformationen zur aktuellen Audiowiedergabe an. Die in Teildiagramm j) dargestellte Erscheinungsform korrespondiert mit der in Teildiagramm c) in Figur 6 dargestellten Erscheinungsform. Durch einen Abwärtswischvorgang 45 mit dem Eingabefokus 6 auf der Statusleiste 1 wechselt der Anwender schließlich von der Detailansicht des Themengebietes 7a zur Ankündigung der Darstellung des Themengebietes 7c ("Klima"). Unter Berücksichtigung des Teildiagramms b) ist ersichtlich, dass ein weiterer Bedienschritt in der in Teildiagramm k) dargestellten Situation zur Darstellung des Themengebietes 7b ("allgemein") führen würde, sofern nicht ein diesen Wechsel ablehnender Bedienvorgang unternommen würde.

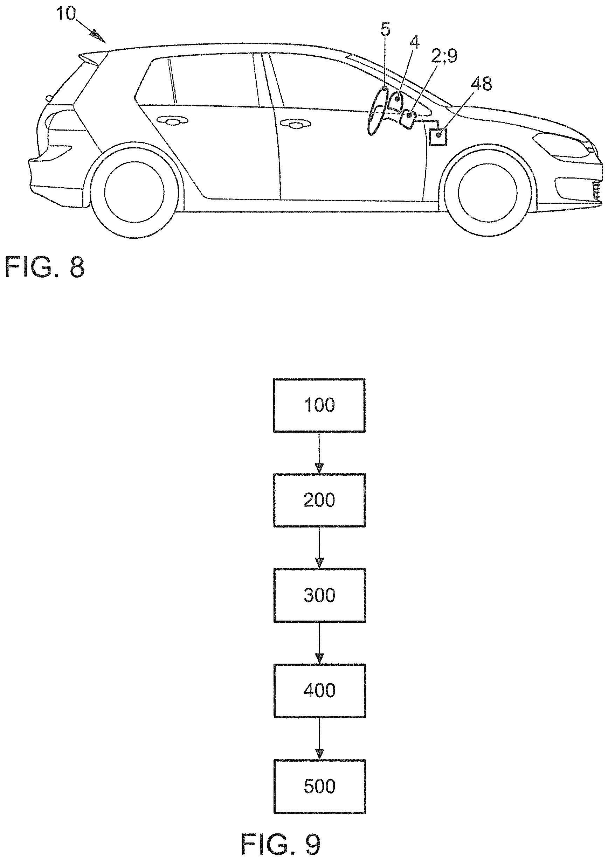

Figur 8 zeigt eine schematische Darstellung eines Fahrzeugs 10 als Fortbewegungsmittel, in welchem ein HMI 2 mit einer als Touch Screen 9 ausgestalteten Eingabeeinheit zentral im Armaturenbrett angeordnet ist. Hinter einem Lenkrad 5 ist ein Kombiinstrument 4 angeordnet, welches einen weiteren Bildschirm umfasst. Das Steuergerät der HMI 2 umfasst einen Prozessor 48, der als Verarbeitungseinheit einer erfindungsgemäßen Vorrichtung Verwendung finden könnte.

Figur 9 zeigt ein Flussdiagramm, veranschaulichend Schritte eines Ausführungsbeispiels eines erfindungsgemäßen Verfahrens. In Schritt 100 definiert der Anwender unterschiedliche Vielzahlen von Informationen zur Anzeige innerhalb unterschiedlicher Ensembles innerhalb einer Statusleiste 1. Dies erfolgt innerhalb eines Konfigurationsmenüs, welches der Anwender 43 über den Touch Screen 9 der erfindungsgemäßen Vorrichtung bedienen kann. Nach Abschluss der Konfiguration unterschiedlicher Erscheinungsformen der Statusleiste 1 zeigt der Bildschirm 2 eine erste Vielzahl von Informationen innerhalb der Statusleiste 1 an. Durch Eingabe mittels eines Dreh-/Drück-Stellers weist der Anwender der Statusleiste 1 den Eingabefokus 6 zu. Durch ein Sprachkommando ("Ansicht Media") sendet der Anwender einen Befehl zum Anpassen des Inhaltes der Statusleiste in Schritt 400, im Ansprechen worauf in Schritt 500 eine zusätzliche Information innerhalb der Statusleiste angezeigt wird.

Selbstverständlich sind die dargestellten Bedienvorgänge lediglich als Beispiele zu verstehen, die, ohne den Bereich der vorliegenden Erfindung zu verlassen, modifiziert oder ergänzt werden könnten. Als ein Beispiel für einen Bedienvorgang ("single-touch") wird ein horizontales oder vertikales Wischen vorgeschlagen. Ein horizontales Wischen über die Statusleiste 1 führt zum Wechsel in das nächste oder vorherige (übergeordnete) Statuszeilenthema. Beispielsweise wird im Zentrum der Statusleiste 1 der Name des aktiven (aktuell gewählten) Themas angezeigt. Rechts und links daneben wird im Display dargestellt, welches diejenigen Themengebiete sind, die durch Zentrieren (Wischen) des jeweiligen Themengebietes erreicht und aktiviert werden können. Auch die Darstellungen möglicher Bildschirminhalte sind lediglich Beispiele und ohne Anspruch auf Vollständigkeit gewählt. Eine dreidimensionale Visualisierung wäre ebenso möglich. Auch könnte lediglich ein Wechsel zwischen zwei unterschiedlichen Darstellungen der Statusleiste 1 dreidimensional animiert werden, indem beispielsweise ein mit 2, 3, 4, 5 oder 6 Flächen ausgestaltetes Walzenelement bei einer entsprechenden Wischeingabe 45 rotiert.

Auch wenn die erfindungsgemäßen Aspekte und vorteilhaften Ausführungsformen anhand der in Verbindung mit den beigefügten Zeichnungsfiguren erläuterten Ausführungsbeispiele im Detail beschrieben worden sind, sind für den Fachmann Modifikationen und Kombinationen von Merkmalen der dargestellten Ausführungsbeispiele möglich, ohne den Bereich der vorliegenden Erfindung zu verlassen, deren Schutzbereich durch die beigefügten Ansprüche definiert wird.

### Bezugszeichenliste

- 1: Statusleiste
- 2: Bildschirm (HMI)
- 3: Hauptinteraktionsbereich
- 4: Kombiinstrument
- 5: Lenkrad
- 6: Eingabefokus
- 7: Themengebiet
- 8: Icons für Funktionen
- 9: Eingabeeinheit
- 10: Fahrzeug
- 11: Schaltflächen
- 20: Mobilfunknetzbetreiber
- 21: Mobilfunknetzfeldstärke
- 22: Lüfterstufe
- 23: Umluftmodus
- 24: Uhrzeit
- 25: Zielort
- 26: Zieladresse
- 27: Entfernung zum Zielort
- 28: Voraussichtliche Ankunftszeit
- 29: Lenkradheizung
- 30: Verkehrsfunk
- 31: Ungelesene Nachricht
- 32: Ladezustand Energiespeicher
- 33: Drahtloskurzstreckendatenverbindung
- 34: Audiowiedergabe aktiv/stumm
- 35: Lautstärkestufe
- 36: Aktueller Interpret
- 37: Aktueller Titel
- 38: Straßenzustand
- 39: Verkehrswarnung
- 40: Status Fahrerassistenzsysteme
- 41a: Temperatur linke Fahrzeugseite
- 41b: Temperatur rechte Fahrzeugseite
- 42a: Frontscheibenheizung
- 42b: Heckscheibenheizung
- 43: Anwender
- 44: Indikator
- 45: Wischvorgang
- 48: Prozessor

## Patentansprüche

1. Verfahren zum Anpassen des Inhaltes einer Statusleiste (1), auf einem Bildschirm (2), insbesondere einer Mensch-Maschine-Schnittstelle eines Fortbewegungsmittels (10), welche sich in einem oberen, durch eine horizontale Linie getrennten Bereich von einem linken Rand zu einem rechten Rand des Bildschirms (2) erstreckt und lediglich zur Anzeige unterschiedlicher Informationen, nicht jedoch für einen Aufruf den Informationen zugeordneter Funktionen eingerichtet ist, wobei das Verfahren die Schritte umfasst:
- Steuern (300) eines Eingabefokus' (6) auf die Statusleiste (1),
- Empfangen (400) einer Anwendereingabe und im Ansprechen darauf
- Anpassen (500) des Inhaltes der Statusleiste (1), indem eine zusätzliche Information (7a; 20, 21, 22, 23, 24, 25, 26, 27, 28, 29, 30, 31, 32, 33, 34, 35, 36, 37, 38, 39, 40, 42a, 42b) angezeigt wird, wobei
- das Anpassen (500) des Inhaltes der Statusleiste (1) ein Anzeigen von Informationen zu einer zweiten Vielzahl betriebszustandsabhängiger Informationen (7a; 20, 21, 22, 23, 24, 25, 26, 27, 28, 29, 30, 31, 32, 33, 34, 35, 36, 37, 38, 39, 40, 42a, 42b) umfasst, wobei die zweite Vielzahl gegenüber der ersten Vielzahl
- ein weiteres Icon umfasst und/oder
- ein Icon weniger umfasst.

2. Verfahren nach Anspruch 1 weiter umfassend den Schritt
- Anzeigen (200) von Informationen, insbesondere in Form von Icons in der Statusleiste (1), zu einer ersten Vielzahl betriebszustandsabhängiger Informationen (7a; 20, 21, 22, 23, 24, 25, 26, 27, 28, 29, 30, 31, 32, 33, 34, 35, 36, 37, 38, 39, 40, 42a, 42b) vor dem Empfangen (400) der Anwendereingabe.

3. Verfahren nach einem der vorstehenden Ansprüche, wobei die Anwendereingabe
- ein Verweilen eines Fingers innerhalb eines vordefinierten Abstandsbereiches zum Bildschirm (2) vor der Statusleiste (1) und/oder
- eine den Bildschirm (2) berührende Geste, insbesondere ein Tippen oder ein Wischen (45) umfasst.

4. Verfahren nach einem der vorstehenden Ansprüche, wobei das Verfahren weiter umfasst:
- Vordefinieren (100) einer ersten Vielzahl und/oder einer zweiten Vielzahl von Informationen (7a; 20, 21, 22, 23, 24, 25, 26, 27, 28, 29, 30, 31, 32, 33, 34, 35, 36, 37, 38, 39, 40, 42a, 42b) in einem Konfigurationsmenü für die Statusleiste (1).

5. Verfahren nach einem der vorstehenden Ansprüche, wobei das Anpassen (500) des Inhaltes der Statusleiste eine Ankündigung einer eine zweite Vielzahl von Informationen anzeigenden Statusleiste (1) umfasst, wobei insbesondere die Ankündigung nach einem Verstreichen einer vordefinierten Zeitdauer ohne Anwendereingabe durch die zweite Vielzahl von Informationen (7a; 20, 21, 22, 23, 24, 25, 26, 27, 28, 29, 30, 31, 32, 33, 34, 35, 36, 37, 38, 39, 40, 42a, 42b) ersetzt wird.

6. Verfahren nach einem der vorstehenden Ansprüche, wobei
- das Anpassen (500) des Inhaltes der Statusleiste (1) eine Anzeige einer Übersicht einer Vielzahl von Themengebieten (7a, 7b, 7c, 7d, 7e) umfasst, aus welchen eines mittels einer weiteren Anwendereingabe ausgewählt wird und im Ansprechen darauf
- Informationen zum gewählten Themengebiet (7a, 7b, 7c, 7d, 7e) in einer größeren Detailtiefe in der Statusleiste (1) angezeigt werden.

7. Verfahren nach einem der vorstehenden Ansprüche, wobei der Eingabefokus (6) auf ein einem vorbestimmten Themengebiet (7a, 7b, 7c, 7d, 7e) zugeordneten Icon in der Statusleiste (1) gesteuert wird und,
- das Anpassen (500) des Inhaltes der Statusleiste (1) eine Anzeige einer dritten Vielzahl von Icons umfasst, welche über das vorbestimmte Themengebiet (7a, 7b, 7c, 7d, 7e) in einer größeren Detailtiefe informieren.

8. Verfahren nach einem der vorstehenden Ansprüche, wobei die erste Vielzahl von Informationen (7a; 20, 21, 22, 23, 24, 25, 26, 27, 28, 29, 30, 31, 32, 33, 34, 35, 36, 37, 38, 39, 40, 42a, 42b) und die zweite Vielzahl von Informationen (7a; 20, 21, 22, 23, 24, 25, 26, 27, 28, 29, 30, 31, 32, 33, 34, 35, 36, 37, 38, 39, 40, 42a, 42b) jeweils eine unterschiedliche Kombination von Icons aus der folgenden Gruppe umfassen:
- aktueller Mobilfunknetzbetreiber (20),
- aktuelle Mobilfunknetzfeldstärke (21),
- Lüfterstufe (22),
- Umluftmodus (23),
- Uhrzeit (24),
- Datum,
- Zielort (25),
- Zieladresse (26),
- Entfernung (27) zum Zielort (25),
- Voraussichtliche Ankunftszeit (28),
- Lenkradheizung (29),
- Scheibenheizung (42a, 42b),
- Verkehrsfunk (30),
- Ungelesene Nachricht (31),
- Ladezustand Energiespeicher (32),
- Drahtloskurzstreckendatenverbindung (33a, 33b),
- Audiowiedergabe (34) aktiv/stumm,
- Lautstärkestufe (35),
- aktueller Interpret (36),
- aktueller Titel (37),
- Straßenzustand (38),
- Verkehrswarnung (39),
- Status Fahrerassistenzsysteme (40),
- Temperatur (41).

9. Verfahren nach einem der vorstehenden Ansprüche weiter umfassend
- Darstellen eines Indikators (44) in der Statusleiste (1), mittels welchem ein Anwender (43) über die Möglichkeit einer Anpassung der Statusleiste (1) informiert wird.

10. Verfahren nach einem der vorstehenden Ansprüche, wobei die Statusleiste (1) als Walze mit einem gleichmäßig polygonförmigen Querschnitt ausgestaltet ist oder bei einer Anwenderinteraktion rotierend animiert wird, wobei die erste Vielzahl von Informationen (7a; 20, 21, 22, 23, 24, 25, 26, 27, 28, 29, 30, 31, 32, 33, 34, 35, 36, 37, 38, 39, 40, 42a, 42b) auf einer ersten Mantelfläche der Walze und die zweite Vielzahl von Informationen auf einer zweiten Mantelfläche der Walze angeordnet sind.

11. Vorrichtung für ein Fahrzeug (10) umfassend
- einen Bildschirm (2),
- eine Eingabeeinheit (9) und
- eine Verarbeitungseinheit (48), wobei die Vorrichtung eingerichtet ist, ein Verfahren nach einem der vorstehenden Ansprüche auszuführen.

12. Vorrichtung nach Anspruch 11, wobei der Bildschirm (2) berührungsempfindlich ist und/oder innerhalb eines Kombiinstrumentes (4) angeordnet ist.

13. Vorrichtung nach Anspruch 11 oder 12, wobei die Eingabeeinheit (9) eingerichtet ist, ein Verweilen eines Fingers eines Anwenders (43) in einem vordefinierten Abstandsbereich zu erkennen und der Statusleiste (1), insbesondere einem auf ihr angeordneten Icon, zuzuordnen.

14. Vorrichtung nach einem der Ansprüche 11 bis 13, wobei die Verarbeitungseinrichtung als Prozessor innerhalb einer Mensch-Maschine-Schnittstelle ausgestaltet ist.

15. Computer lesbares Medium enthaltend Anweisungen, welche, wenn sie auf einem programmierbaren Prozessor ausgeführt werden, den Prozessor veranlassen, ein Verfahren gemäß einem der vorstehenden Ansprüche 1 bis 10 durchzuführen.

16. Signalfolge repräsentierend Anweisungen, welche, wenn sie auf einem programmierbaren Prozessor ausgeführt werden, den Prozessor veranlassen, ein Verfahren gemäß einem der vorstehenden Ansprüche 1 bis 10 durchzuführen.

## Claims

1. Method for adapting the content of a status bar (1) on a screen (2), in particular of a man-machine interface of a means of transport (10), which status bar extends from a left-hand edge to a right-hand edge of the screen (2) in an upper region separated by a horizontal line and is configured only to display different items of information, but not to call functions assigned to the information, wherein the method comprises the steps of:
- controlling (300) an input focus (6) on the status bar (1),
- receiving (400) a user input and, in response thereto,
- adapting (500) the content of the status bar (1) by displaying an additional item of information (7a; 20, 21, 22, 23, 24, 25, 26, 27, 28, 29, 30, 31, 32, 33, 34, 35, 36, 37, 38, 39, 40, 42a, 42b),
- the adaptation (500) of the content of the status bar (1) comprises displaying information for a second multiplicity of items of information dependent on the operating state (7a; 20, 21, 22, 23, 24, 25, 26, 27, 28, 29, 30, 31, 32, 33, 34, 35, 36, 37, 38, 39, 40, 42a, 42b), wherein the second multiplicity, in comparison with the first multiplicity,
- comprises a further icon and/or
- comprises one icon less.

2. Method according to Claim 1, also comprising the step of
- displaying (200) information, in particular in the form of icons in the status bar (1), for a first multiplicity of items of information dependent on the operating state (7a; 20, 21, 22, 23, 24, 25, 26, 27, 28, 29, 30, 31, 32, 33, 34, 35, 36, 37, 38, 39, 40, 42a, 42b) before receiving (400) the user input.

3. Method according to one of the preceding claims, wherein the user input comprises
- lingering of a finger in front of the status bar (1) within a predefined distance range to the screen (2), and/or
- a gesture touching the screen (2), in particular typing or swiping (45).

4. Method according to one of the preceding claims, wherein the method also comprises:
- predefining (100) a first multiplicity and/or a second multiplicity of items of information (7a; 20, 21, 22, 23, 24, 25, 26, 27, 28, 29, 30, 31, 32, 33, 34, 35, 36, 37, 38, 39, 40, 42a, 42b) in a configuration menu for the status bar (1).

5. Method according to one of the preceding claims, wherein the adaptation (500) of the content of the status bar comprises an announcement of a status bar (1) displaying a second multiplicity of items of information, wherein the announcement, in particular, is replaced with the second multiplicity of items of information (7a; 20, 21, 22, 23, 24, 25, 26, 27, 28, 29, 30, 31, 32, 33, 34, 35, 36, 37, 38, 39, 40, 42a, 42b) after a predefined period without a user input has elapsed.

6. Method according to one of the preceding claims, wherein
- the adaptation (500) of the content of the status bar (1) comprises a display of an overview of a multiplicity of subject areas (7a, 7b, 7c, 7d, 7e) from which one is selected by means of a further user input and, in response thereto,
- information relating to the selected subject area (7a, 7b, 7c, 7d, 7e) is displayed in a greater level of detail in the status bar (1).

7. Method according to one of the preceding claims, wherein the input focus (6) on an icon assigned to a predetermined subject area (7a, 7b, 7c, 7d, 7e) in the status bar (1) is controlled, and
- the adaptation (500) of the content of the status bar (1) comprises a display of a third multiplicity of icons which provide information on the predetermined subject area (7a, 7b, 7c, 7d, 7e) in a greater level of detail.

8. Method according to one of the preceding claims, wherein the first multiplicity of items of information (7a; 20, 21, 22, 23, 24, 25, 26, 27, 28, 29, 30, 31, 32, 33, 34, 35, 36, 37, 38, 39, 40, 42a, 42b) and the second multiplicity of items of information (7a; 20, 21, 22, 23, 24, 25, 26, 27, 28, 29, 30, 31, 32, 33, 34, 35, 36, 37, 38, 39, 40, 42a, 42b) each comprise a different combination of icons from the following group:
- current mobile radio network operator (20),
- current mobile radio network field strength (21),
- fan level (22),
- air circulation mode (23),
- time (24),
- date,
- destination (25),
- destination address (26),
- distance (27) to the destination (25),
- likely arrival time (28),
- steering wheel heating (29),
- windscreen heating (42a, 42b),
- traffic radio (30),
- unread message (31),
- state of charge of the energy store (32),
- wireless short-range data connection (33a, 33b),
- audio playback (34) active/mute,
- volume level (35),
- current artist (36),
- current title (37),
- road condition (38),
- traffic warning (39),
- status of the driver assistance systems (40),
- temperature (41).

9. Method according to one of the preceding claims, also comprising
- displaying an indicator (44) in the status bar (1), which indicator is used to inform a user (43) of the possibility of adapting the status bar (1).

10. Method according to one of the preceding claims, wherein the status bar (1) is in the form of a roller with a uniformly polygonal cross section or is animated in a rotating manner in the case of a user interaction, wherein the first multiplicity of items of information (7a; 20, 21, 22, 23, 24, 25, 26, 27, 28, 29, 30, 31, 32, 33, 34, 35, 36, 37, 38, 39, 40, 42a, 42b) are arranged on a first lateral surface of the roller and the second multiplicity of items of information are arranged on a second lateral surface of the roller.

11. Apparatus for a vehicle (10), comprising
- a screen (2),
- an input unit (9), and
- a processing unit (48), wherein the apparatus is configured to carry out a method according to one of the preceding claims.

12. Apparatus according to Claim 11, wherein the screen (2) is touch-sensitive and/or is arranged inside a combination instrument (4).

13. Apparatus according to Claim 11 or 12, wherein the input unit (9) is configured to detect lingering of a finger of a user (43) in a predefined distance range and to assign it to the status bar (1), in particular to an icon arranged on the latter.

14. Apparatus according to one of Claims 11 to 13, wherein the processing device is in the form of a processor inside a man-machine interface.

15. Computer-readable medium containing instructions which, when executed on a programmable processor, cause the processor to carry out a method according to one of the preceding Claims 1 to 10.

16. Signal sequence representing instructions which, when executed on a programmable processor, cause the processor to carry out a method according to one of the preceding Claims 1 to 10.

## Revendications

1. Procédé d'adaptation du contenu d'une barre d'état (1) sur un écran (2), en particulier d'une interface homme-machine d'un moyen de locomotion (10), qui s'étend dans une zone supérieure séparée par une ligne horizontale d'un bord gauche à un bord droit de l'écran (2) et qui est conçue pour afficher uniquement des informations différentes, mais pas pour lancer des fonctions associées aux informations, dans lequel le procédé comprend les étapes suivantes :
- commande (300) d'un point focal de saisie (6) sur la barre d'état (1),
- réception (400) d'une saisie de l'utilisateur et, en réponse à cela,
- adaptation (500) du contenu de la barre d'état (1) par l'affichage d'une information supplémentaire (7a ; 20, 21, 22, 23, 24, 25, 26, 27, 28, 29, 30, 31, 32, 33, 34, 35, 36, 37, 38, 39, 40, 42a, 42b), dans lequel
- l'adaptation (500) du contenu de la barre d'état (1) comprend l'affichage d'informations relatives à une deuxième pluralité d'informations dépendant de l'état de fonctionnement (7a ; 20, 21, 22, 23, 24, 25, 26, 27, 28, 29, 30, 31, 32, 33, 34, 35, 36, 37, 38, 39, 40, 42a, 42b), dans lequel la deuxième pluralité comprend, par rapport à la première pluralité
- une autre icône et/ou
- une icône de moins.

2. Procédé selon la revendication 1, comprenant en outre l'étape suivante
- affichage (200) d'informations, en particulier sous forme d'icônes dans la barre d'état (1), relatives à une première pluralité d'information dépendant de l'état de fonctionnement (7a ; 20, 21, 22, 23, 24, 25, 26, 27, 28, 29, 30, 31, 32, 33, 34, 35, 36, 37, 38, 39, 40, 42a, 42b) avant la réception (400) de la saisie de l'utilisateur.

3. Procédé selon l'une des revendications précédentes, dans lequel la saisie de l'utilisateur comprend
- une présence d'un doigt à moins d'une distance prédéfinie de l'écran (2) devant la barre d'état (1) et/ou
- un geste de toucher de l'écran (2), en particulier un tapotement ou un glissement (45).

4. Procédé selon l'une des revendications précédentes, le procédé comprenant en outre :
- la prédéfinition (100) d'une première pluralité et/ou d'une deuxième pluralité d'informations (7a ; 20, 21, 22, 23, 24, 25, 26, 27, 28, 29, 30, 31, 32, 33, 34, 35, 36, 37, 38, 39, 40, 42a, 42b) dans un menu de configuration de la barre d'état (1).

5. Procédé selon l'une des revendications précédentes, dans lequel l'adaptation (500) du contenu de la barre d'état comprend une notification du fait qu'une barre d'état (1) affiche une deuxième pluralité d'informations, dans lequel la notification est remplacée, en particulier, après l'écoulement d'un temps prédéfini sans intervention de l'utilisateur, par la deuxième pluralité d'informations (7a ; 20, 21, 22, 23, 24, 25, 26, 27, 28, 29, 30, 31, 32, 33, 34, 35, 36, 37, 38, 39, 40, 42a, 42b).

6. Procédé selon l'une des revendications précédentes, dans lequel
- l'adaptation (500) du contenu de la barre d'état (1) comprend l'affichage d'une vue d'ensemble d'une pluralité de domaines thématiques (7a, 7b, 7c, 7d, 7e) dont l'un est sélectionné au moyen d'une autre saisie de l'utilisateur et, en réponse à cela,
- des informations relatives au domaine thématique sélectionné (7a, 7b, 7c, 7d, 7e) sont affichées plus en détail dans la barre d'état (1).

7. Procédé selon l'une des revendications précédentes, dans lequel le point focal de saisie (6) est commandé sur une icône dans la barre d'état (1) associée à un domaine thématique prédéterminé (7a, 7b, 7c, 7d, 7e) et,
- l'adaptation (500) du contenu de la barre d'état (1) comprend l'affichage d'une troisième pluralité d'icônes qui fournissent des informations plus détaillées relatives au domaine thématique prédéterminé (7a, 7b, 7c, 7d, 7e).

8. Procédé selon l'une des revendications précédentes, dans lequel la première pluralité d'informations (7a ; 20, 21, 22, 23, 24, 25, 26, 27, 28, 29, 30, 31, 32, 33, 34, 35, 36, 37, 38, 39, 40, 42a, 42b) et la deuxième pluralité d'informations (7a ; 20, 21, 22, 23, 24, 25, 26, 27, 28, 29, 30, 31, 32, 33, 34, 35, 36, 37, 38, 39, 40, 42a, 42b) comprennent chacune une combinaison différente d'icônes du groupe suivant :
- opérateur de réseau mobile actuel (20),
- intensité de champ actuelle du réseau mobile (21),
- niveau du ventilateur (22),
- mode de recirculation de l'air (23),
- heure (24),
- date,
- destination (25),
- adresse de destination (26),
- distance (27) jusqu'à la destination (25),
- heure d'arrivée prévue (28),
- chauffage du volant (29),
- chauffage de pare-brise (42a, 42b),
- radio de trafic (30),
- message non lu (31),
- état de charge de l'accumulateur d'énergie (32),
- connexion sans fil de données à courte portée (33a, 33b),
- lecture audio (34) active/muette,
- niveau de volume (35),
- interprète actuel (36),
- titre actuel (37),
- état des routes (38),
- avertissement de trafic (39),
- état des systèmes d'aide à la conduite (40),
- température (41).

9. Procédé selon l'une des revendications précédentes, comprenant en outre
- l'affichage d'un indicateur (44) dans la barre d'état (1), au moyen duquel un utilisateur (43) est informé de la possibilité d'une adaptation de la barre d'état (1).

10. Procédé selon l'une des revendications précédentes, dans lequel la barre d'état (1) est réalisée sous la forme d'un rouleau de section polygonale régulière ou est animée en rotation lors de l'interaction avec l'utilisateur, dans lequel la première pluralité d'informations (7a ; 20, 21, 22, 23, 24, 25, 26, 27, 28, 29, 30, 31, 32, 33, 34, 35, 36, 37, 38, 39, 40, 42a, 42b) sont disposées sur une première surface circonférentielle du rouleau et la deuxième pluralité d'informations sont disposées sur une deuxième surface circonférentielle du rouleau.

11. Dispositif destiné à un véhicule (10) comprenant
- un écran (2),
- une unité de saisie (9) et
- une unité de traitement (48), dans lequel le dispositif est conçu pour mettre en œuvre un procédé selon l'une des revendications précédentes.

12. Dispositif selon la revendication 11, dans lequel l'écran (2) est sensible au toucher et/ou est disposé à l'intérieur d'un instrument combiné (4).

13. Dispositif selon la revendication 11 ou 12, dans lequel l'unité de saisie (9) est conçue pour détecter la présence d'un doigt d'un utilisateur (43) dans une plage de distances prédéfinie et pour l'associer à la barre d'état (1), en particulier à une icône qui y est disposée.

14. Dispositif selon l'une des revendications 11 à 13, dans lequel le dispositif de traitement est réalisé sous la forme d'un processeur au sein d'une interface homme-machine.

15. Support lisible par ordinateur contenant des instructions qui, lorsqu'elles sont exécutées sur un processeur programmable, amènent le processeur à mettre en œuvre un procédé selon l'une des revendications 1 à 10 précédentes.

16. Séquence de signaux représentant des instructions qui, lorsqu'elles sont exécutées sur un processeur programmable, amènent le processeur à mettre en œuvre un procédé selon l'une des revendications 1 à 10 précédentes.
